# FASCICULE DE BREVET EUROPEEN

(11) **EP 0 475 813 B1**
(45) Date de publication et mention de la délivrance du brevet: **18.11.1993**
(21) Numéro de dépôt: 91402341.1
(22) Date de dépôt: 02.09.1991
(51) Int. Cl.: F01D 5/30

(54) **Roue de turbomachine à pales rapportées**
Turbomaschinenrotor mit Schaufelbefestigung
Rotor for a turbomachine with blade attachement

(30) Priorité: 11.09.1990 FR 9011200
(43) Date de publication de la demande: 18.03.1992
(73) Titulaire: TURBOMECA, Société dite:, F-64511 Bordes (FR)
(72) Inventeur: Lalanne, Bernard, F-64000 Pau (FR)
(74) Mandataire: Barnay, André François

(56) Documents cités:
- EP-A- 0 222 679
- EP-A- 0 286 227
- FR-A- 2 290 570
- FR-A- 2 524 933
- GB-A- 2 058 945
- GB-A- 2 198 780

## Description

La présente invention concerne une roue de turbomachine à pales rapportées sur un rotor comportant une couronne périphérique annulaire dans laquelle sont formés des logements axiaux ouverts dont chacun reçoit le pied d'une pale.

Chaque pale est retenue radialement dans son logement, pour résister aux effets de la force centrifuge, par coopération de formes complémentaires du type tenon et mortaise à direction d'emboîtement parallèle à l'axe du rotor, le pied de chaque pale pouvant notamment présenter, en section par un plan radial, un profil à dents dit en "pied de sapin".

Le pied de chaque pale est immobilisé axialement dans son logement par deux flasques annulaires agencés de part et d'autre des faces opposées du rotor, les flasques obturant au moins partiellement les extrémités axiales opposées des logements des pieds des pales et faisant ainsi fonction de couvercles de fermeture de ces loggements. Un exemple d'un tel arrangement est donné dans le document EP-A-0 286 227.

Dans la conception d'une telle roue de turbomachine, et notamment d'une turbine de moteur d'avion ou d'hélicoptère, il est bien entendu nécessaire d'assurer le maintien en position le plus parfait possible des pales ou aubages de la turbine afin d'éviter toutes vibrations, notamment sous l'effet de la force centrifuge qui est particulièrement importante du fait des grandes vitesses de rotation atteintes dans ce type d'application. Les flasques formant couvercles assurent donc une fonction essentielle pour la turbine et ils doivent être fixés de manière précise et fiable sur le rotor à pales rapportées directement ou indirectement.

A cet effet, il est souhaitable de pouvoir disposer de moyens de fixation des flasques dont le poids soit réduit au minimum. Il est également souhaitable de pouvoir supprimer toute liaison ou fixation du type fileté, par exemple par des boulons ou goujons et des écrous, ce type de fixation étant particulièrement lourd et présentant des risques importants de désassemblage accidentel sous l'effet des vibrations.

Il est également nécessaire que les moyens de fixation continuent d'assurer leur fonction dans les meilleures conditions possibles et avec toute la fiabilité requise aux différentes températures de fonctionnement de la turbomachine dont les organes sont soumis à des chocs thermiques importants.

L'invention a donc pour but de proposer une conception de roue de turbomachine dont les moyens de fixation des flasques d'immobilisation axiale des pieds des pales remplissent une ou plusieurs des conditions qui viennent d'être mentionnées.

Dans ce but, la roue de turbomachine selon l'invention est caractérisée notamment en ce qu'un premier flasque est fixé au rotor par un dispositif de fixation du type à baïonnette dont les ergots sont formés sur le flasque et sont reçus dans des encoches formées dans la couronne annulaire du rotor et dont les extrémités ouvertes d'engagement des ergots débouchent dans les parois transversales qui délimitent les logements des pieds des pales.

Selon d'autres caractéristiques de l'invention :
- chacune des encoches est une portion d'une gorge radiale formée dans la surface cylindrique extérieure de la couronne périphérique annulaire de rotor et chaque ergot du dispositif de fixation à baïonnette comporte une branche d'extrémité qui s'étend radialement en direction de l'axe de rotor et qui est reçue dans la gorge,et une branche de liaison qui relie la branche d'extrémité au flasque;
- ce premier flasque latéral comporte un anneau de centrage qui fait saillie axialement depuis une de ses faces latérales pour coopérer avec une portion de centrage correspondante formée dans la première face latérale en vis-à-vis du rotor;
- le second flasque comporte une portion annulaire plane qui est en appui axial contre une portion plane correspondante de la seconde face latérale en vis-à-vis du rotor, ces deux portions annulaires planes étant délimitées radialement en direction de l'axe du rotor par deux bords internes amincis en forme de portions de disques qui sont maintenues serrées l'une contre l'autre par un anneau de serrage axial;
- les faces latérales extérieures opposées des deux disques sont des portions de surfaces coniques d'angles opposés et l'anneau de serrage est un anneau ouvert déformable élastiquement qui comporte une gorge radiale extérieure de section en forme de V complémentaire des surfaces coniques, l'anneau de serrage étant monté précontraint radialement pour appliquer un effort de serrage axial auxdites portions annulaires planes d'appui;
- le second flasque comprend un anneau de centrage qui fait saillie axialement depuis une de ses faces latérales pour coopérer avec une portion de centrage correspondante formée dans la seconde face latérale en vis-à-vis du rotor;
- il est prévu des moyens d'immobilisation en rotation du second flasque par rapport au rotor; et
- ces moyens d'immobilisation peuvent être constitués par exemple par au moins une patte qui fait saillie axialement depuis la face latérale du flasque et qui coopère avec une portion en regard d'une des pales pour empêcher la rotation du flasque par rapport au rotor.

La description qui va suivre, en regard des dessins annexés à titre d'exemple non limitatif, permettra de bien comprendre comment la présente invention peut être mise en pratique.

La figure 1 est une demi-vue en coupe axiale d'un exemple de réalisation d'une roue de turbomachine à pales rapportées comportant deux flasques qui sont fixés par des moyens réalisés conformément aux enseignements de l'invention, la roue étant représentée en position assemblée.

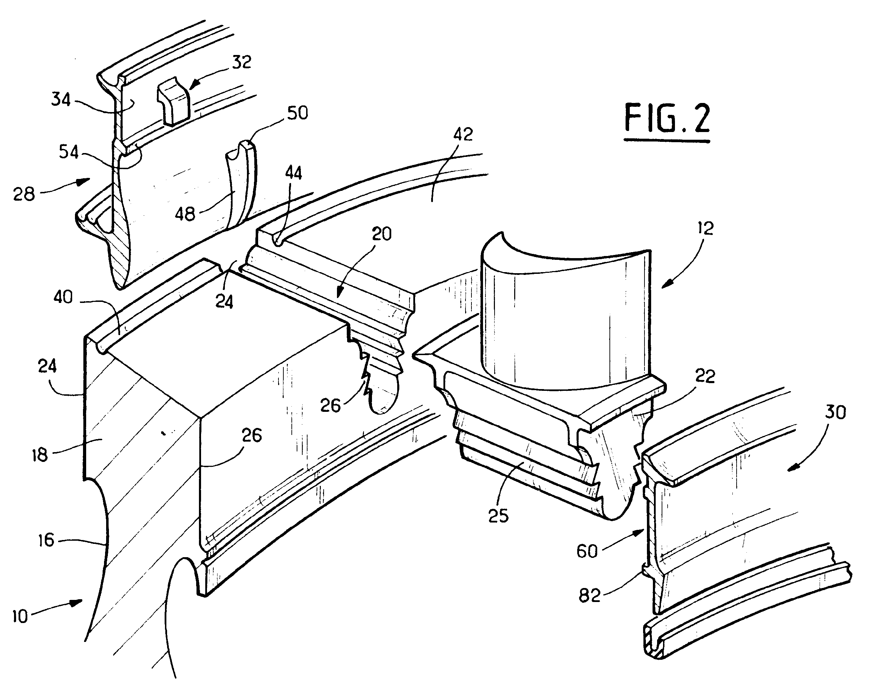

La figure 2 est une vue partielle en perspective éclatée et à échelle agrandie de la roue représentée à la figure 1 et sur laquelle on voit une pale et les parties correspondantes du rotor et des flasques destinées à la recevoir et à l'immobiliser en position.

On a représenté aux figures une roue ou disque de turbine de turbomachine qui est constituée pour l'essentiel par un rotor 10 d'axe de rotation X-X et de pales rapportées 12.

Le rotor 10 comporte une portion centrale formant moyeu 14 qui se prolonge radialement vers l'extérieur par une portion médiane amincie 16 et qui se termine par une portion périphérique annulaire cylindrique 18.

La couronne périphérique 18 comporte une série de logements 20 qui sont destinés à recevoir le pied 22 de chacune des pales rapportées 12.

Le logement 20 et le pied 22 sont de profils complémentaires dit en "pied de sapin".

Cet assemblage du type à tenon et mortaise couramment utilisé dans la construction des turbines permet d'assurer un ajustement très précis en position de la pale 12 sur le rotor 10 et son immobilisation dans la direction radiale,afin de résister aux efforts dûs à la force centrifuge qui sont encaissés par les flancs des dents 25 du pied de sapin.

Chaque logement 20 est un logement ouvert axialement, c'est-à-dire qui débouche de part et d'autre dans les deux faces latérales opposées 24 et 26 de la couronne périphérique 18 du rotor 10.

D'une manière connue en soi, le montage de chacune des pales 12 s'effectue en introduisant axialement le pied 22 dans son logement correspondant 20.

On décrira maintenant les moyens d'immobilisation axiale en position des pieds 22 dans leurs logements respectifs 20.

Les pales 12 sont immobilisées axialement en position au moyen d'un premier flasque latéral formant couvercle 28 et au moyen d'un second flasque latéral formant couvercle 30.

Dans la conception représentée aux figures, le flasque latéral 28 est le flasque amont tandis que le flasque 30 est le flasque aval si l'on se réfère à la direction d'écoulement du fluide dans la turbomachine.

La fixation du flasque 28 en position contre la première face latérale 24 de la couronne 18 est assurée au moyen d'un dispositif de fixation du type à baïonnette constitué par une série d'ergots 32 formés sur la face latérale 34 du flasque 28 qui coopère avec la première face latérale 24 du rotor.

Chaque ergot 32 présente, en section par un plan axial, une forme en L inversé et comporte une branche d'extrémité 36 qui s'étend selon une direction radiale en direction de l'axe X-X du rotor. La branche d'extrémité 36 est reliée à la face latérale du flasque par une branche de liaison 38 qui est sensiblement parallèle à l'axe.

Les encoches du dispositif de fixation à baïonnette sont constituées par une gorge radiale 40 formée dans la surface périphérique cylindrique extérieure 42 de la couronne annulaire 18.

La section de la gorge 40 est prévue pour recevoir les branches d'extrémité 36 des ergots qui peuvent y être introduites par les extrémités ouvertes 44 de la gorge 40 qui débouchent dans les parois transversales qui délimitent les logements de pied de pale 20.

Selon la conception classique d'un dispositif de fixation à baïonnette, le montage du flasque 28 s'effectue en provoquant la rotation du flasque 28 par rapport au rotor 10 de manière à engager les ergots 32 dans la gorge 40 et provoquer un effet de serrage axial du flasque contre la première face latérale 24 de la couronne notamment grâce à un profil correspondant de la branche d'extrémité 36.

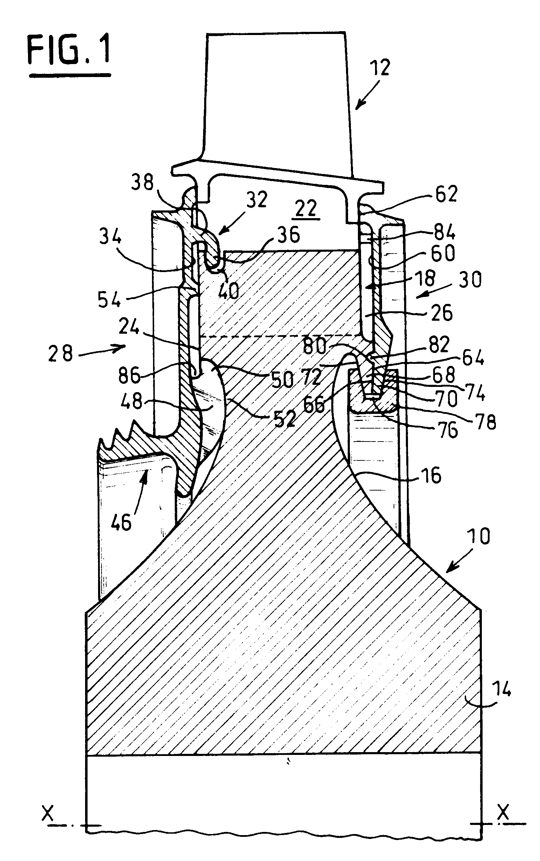

Le flasque latéral 28 se prolonge à sa partie intérieure, c'est-à-dire en dessous du niveau des pieds des pales en considérant la figure 1, par une portion 46 sur laquelle sont formées des ailettes de refroidissement 48 qui peuvent s'étendre dans un plan radial ou former un angle avec un tel plan.

Ces ailettes 48 sont limitées à leur bord radial extérieur par un anneau de centrage 50 réalisé sous la forme d'une portion annulaire qui s'étend axialement en saillie depuis la face latérale 34 en direction du disque 10 et qui coopère avec une portion de profil complémentaire 52 de la partie amincie 16 du disque. On assure ainsi le centrage du flasque 28 par rapport au rotor 10 lors de son montage sur le rotor.

La face latérale 34 du flasque 28 comporte également un bord annulaire en saillie axiale 54 qui prend appui contre la première face latérale 24 de la couronne 18 et contre les faces d'extrémité axiale des pieds 22 des pales 12.

Comme cela sera expliqué par la suite, le flasque 28 est immobilisé en rotation par rapport au rotor 10 par les pieds des pales 22 qui, en position assemblée, obturent les extrémités ouvertes 44 d'introduction des ergots 32 de la rainure 40 et empêchent donc ainsi tout échappement et désassemblage accidentel du flasque 28.

Le second flasque latéral aval 30 comporte, sur sa face latérale 60 tournée vers la seconde face latérale 26 de la couronne 18, un bord axial supérieur d'appui 62 contre des portions en vis-à-vis des pales 12.

La fixation en position du flasque 30 sur le rotor 10 est assurée grâce aux moyens suivants.

Deux portions annulaires d'appui 64 et 66 sont formées respectivement sur deux prolongements 68 et 70 de la couronne 18 et du flasque 30.

Chacun des prolongements 68, 70 est une portion en forme de couronne d'un disque qui s'étend radialement en direction de l'axe X-X du rotor.

Les faces latérales extérieures 72 et 74 des disques 68 et 70 sont deux portions de surfaces coniques d'angles opposés de manière que, en position assemblée comme cela est illustré à la figure 1, l'ensemble présente sensiblement un profil extérieur en forme de V.

Les deux portions en forme de disques 68 et 70 sont reçues dans une gorge radiale extérieure 76 d'un anneau de serrage axial 78.

La gorge 76 présente également en section par un plan axial, un profil en forme de V complémentaire de celui des surfaces 72 et 74.

La gorge 76 est suffisamment profonde pour assurer que les bords radiaux internes des portions 68 et 70 ne sont pas en butée dans le fond de la gorge 76.

L'anneau de serrage 78 est un anneau déformable élastiquement et ouvert, à la manière d'un anneau élastique ou circlips qui se monte dans une gorge radiale interne d'un alésage.

L'anneau est monté sur les portions 68 et 70 précontraint élastiquement, c'est-à-dire avec une contrainte interne tendant à en accroître le diamètre de manière à assurer un effet de serrage axiale des portions d'appui planes 64 et 66 dû à la coopération des flancs inclinés de la gorge 76 avec les portions coniques 72 et 74 par effet de coin.

Le centrage du flasque 30 par rapport au rotor 10 est assuré au moyen d'une portion annulaire en saillie 80 qui est reçue dans une gorge correspondante 82 du rotor.

Afin d'immobiliser le flasque 30 en rotation par rapport au rotor 10, la face latérale 60 de celui-ci peut comporter une ou plusieurs pattes 84 qui font saillie axialement en direction du rotor et qui sont prévues pour coopérer avec des portions en regard des pales 12.

L'assemblage d'une roue de turbomachine réalisé conformément aux enseignements de l'invention s'effectue de la manière suivante.

L'opérateur commence par monter le flasque ou couvercle amont 28 grâce à son dispositif de fixation à baïonnette. Une rotation d'un angle de 2π/2N radians, si N est le nombre de pales 12, permet d'introduire les ergots 32 dans la gorge 40.

A l'issue de cette opération le flasque 28 est immobilisé axialement et centré par rapport au rotor 10.

L'opérateur monte ensuite les pales 12 en introduisant leurs pieds 22 dans les logements 20, ce qui a pour effet d'obturer les extrémités ouvertes 44 de la rainure 40 et d'empêcher ainsi tout démontage du flasque 28.

L'opérateur vient ensuite centrer et plaquer le flasque formant couvercle aval 30 contre la seconde face latérale 26 du rotor 10 et il l'immobilise axialement en mettant en place l'anneau de serrage 78.

A l'issue de ces opérations, les pieds 22 des pales 12 sont immobilisés axialement par les deux flasques formant couvercles 28 et 30 qui obturent les extrémités ouvertes des logements 20.

En fonctionnement, lorsque la roue de la turbine tourne à haute vitesse, tout démontage accidentel du premier flasque 28 est impossible du fait du montage à baïonnette, et la force centrifuge appliquée à l'anneau 78 a pour conséquence d'augmenter l'effet de serrage axial du second flasque aval 30 contre la face latérale 26 du rotor 10.

Comme cela est illustré à la figure 1, les deux flasques amont 28 et aval 30 comportent des portions qui les prolongent axialement vers la veine d'air de façon à assurer une étanchéité avec la cavité interne de la turbomachine.

Dans le cas de pales de turbine possédant une circulation interne d'air en vue d'en assurer le refroidissement, l'air de refroidissement comprimé dans le couvercle amont 28 peut cheminer par le passage 86 aménagé dans la zone de l'anneau de centrage 50. L'air comprimé pénètre ensuite dans la pale de turbine, soit par des orifices aménagés sur la face amont de la pale, soit dans sa partie inférieure. Dans ce dernier cas, un passage d'air doit être prévu dans la partie inférieure de la dernière dent du pied de sapin de chaque pale.

## Revendications

1. Roue de turbomachine à pales (12) rapportées sur un rotor (10) comportant une couronne périphérique annulaire (18) dans laquelle sont formés des logements axiaux ouverts (20) dont chacun reçoit le pied (22) d'une pale (12) qui y est retenu radialement par coopération de forme complémentaire (25) du type tenon et mortaise et qui y est immobilisé axialement par deux flasques (28, 30) agencés de part et d'autre des faces latérales opposées (24, 26) du rotor et qui obturent au moins partiellement les extrémités axiales opposées des logements (20) des pieds (22) des pales (12), caractérisée en ce qu'un premier flasque (28) est fixé au rotor (10) par un dispositif du type à baïonnette dont les ergots (32) sont formés sur le flasque (28) et sont reçus dans des encoches (40) formées dans la couronne annulaire (18) du rotor (10) et dont les extrémités ouvertes (44) d'engagement des ergots (32) débouchent dans les parois transversales qui délimitent les logements (20) des pieds des pales (12).

2. Roue de turbomachine selon la revendication 1, caractérisée en ce que chacune des encoches est une portion d'une gorge radiale (40) formée dans la surface cylindrique extérieure (42) de la couronne périphérique annulaire (18) du rotor (10), et en ce que chaque ergot (32) comporte une branche d'extrémité (36) qui s'étend radialement en direction de l'axe (X-X) du rotor et qui est reçue dans la gorge (40), et une branche de liaison (38) qui relie la branche d'extrémité (36) au flasque (28).

3. Roue de turbomachine selon l'une des revendications 1 ou 2, caractérisée en ce que le premier flasque latéral (28) comporte un anneau de centrage (50) qui fait saillie axialement depuis une de ses faces latérales (34) pour coopérer avec une portion de centrage correspondante (52) formée dans la première face latérale en vis-à-vis du rotor (10).

4. Roue de turbomachine selon l'une quelconque des revendications précédentes, caractérisée en ce que le second flasque (30) comporte une portion annulaire plane (66) qui est en appui axial contre une portion plane correspondante (64) de la seconde face latérale en vis-à-vis du rotor (10), ces deux portions annulaires planes (64, 66) étant délimitées radialement en direction de l'axe du rotor par deux bords internes amincis en forme de portions de disques (68, 70) qui sont maintenues serrées l'une contre l'autre par un anneau de serrage (78).

5. Roue de turbomachine selon la revendication 4, caractérisée en ce que les faces latérales extérieures opposées (72, 74) et deux portions de disques sont des portions de surfaces coniques d'angles opposés, lorsque l'anneau de serrage (78) est un anneau ouvert déformable élastiquement qui comporte une gorge radiale extérieure (76) de section en forme de V complémentaire desdites surfaces coniques (72, 74), et en ce que l'anneau de serrage (78) est monté précontraint radialement pour appliquer un effort de serrage axial auxdites portions annulaires d'appui (64, 66).

6. Roue de turbomachine selon l'une des revendications 4 ou 5, caractérisée en ce que le second flasque (30) comporte un anneau de centrage (80) qui fait saillie axialement depuis une de ses faces latérales (60) pour coopérer avec une portion de centrage correspondante (82) formée dans la seconde face latérale en vis-à-vis du rotor.

7. Roue de turbomachine selon l'une quelconque des revendications 4 à 6, caractérisée en ce qu'il est prévu des moyens d'immobilisation en rotation du second flasque (30) par rapport au rotor (10).

8. Roue de turbomachine selon la revendication 7, caractérisée en ce que lesdits moyens d'immobilisation en rotation comportent au moins une patte (83) qui fait saillie axialement depuis le flasque (30) et qui coopère avec une portion en regard d'une des pales (12) pour empêcher la rotation du flasque (30) par rapport au rotor (10).

## Claims

1. Rotor for a turbomachine with blades (12) anchored on a rotor (10) having an annular peripheral rim (18) in which are formed axially open recesses (20) each of which receives the foot (22) of a blade (12) which is retained in that position radially by the co-operation of complementary shapes (25) of the mortice and tenon type and which is located there axially by two cheeks (28, 30) engaging on the one side and the other the opposed side faces (24, 26) of the rotor and which at least partially block off the opposite axial ends of the recesses (20) for the feet (22) of the blades (12), characterised in that a first cheek (28) is secured to the rotor (10) by an arrangement of the bayonet type of which the lugs (32) are formed on the cheek (28) and are received in notches (44) formed in the annular rim (18) of the rotor and of which the open ends (44) for insertion of the lugs (32) open into the transverse walls which define the recesses (29) for the feet of the blades (12),

2. Turbomachine rotor according to claim 1, characterised in that each of the notches is a portion of a radial groove (40) formed in the outer cylindrical surface (42) of the annular peripheral rim of the rotor (10) and in that each lug (32) comprises an end limb (36) which extends radially towards the axis (X-X) of the rotor and which is received in the groove (40) and a connecting limb (40) which joins the end limb (36) to the cheek (28).

3. Turbomachine rotor according to one of claims 1 or 2, characterised in that the first side cheek (28) has a centring ring (50) which projects axially from one of the side faces (34) to co-operate with a corresponding centring portion (52) formed on the first opposing side face of the rotor (10).

4. Turbomachine rotor according to any one of the preceding claims, characterised in that the second cheek (30) has a plane annular portion (66) which engages axially against a corresponding plane portion (64) of the second opposing side face of the rotor (10) these two plane annular portions (64, 66) terminating radially in a direction towards the axis of the rotor in two tapering internal rims in the form of portions of disc (68, 70) which are maintained locked one against the other by a locking ring (78).

5. Turbomachine rotor according to claim 4, characterised in that the opposed external side faces (72, 74) and two disc portions are portions of opposed conically angled surfaces, whilst the locking ring (78) is an elastically deformable open ring which has an external radial groove (76) of V-section complementary to the said conical surfaces (72, 72) and in that the locking ring (78) is mounted with radial pre-stress to apply an axial locking force to the said annular engaging portions (64, 66).

6. Turbomachine rotor according to one of claims 4 or 5, characterised in that the second cheek (30) has a centring ring (80) which projects axially from one of its side faces (60) to co-operate with a corresponding centring portion (82) formed on the opposed second side face of the rotor.

7. Turbomachine rotor according to any one of claims 4 to 6, characterised in that means are provided for locking the second cheek (30) against rotation with respect the rotor (10).

8. Turbomachine rotor according to claim 7, characterised in that the said means for preventing rotation comprise at least one claw (83) which projects axially from the cheek (30) and co-operates with a facing portion of one of the blades (12) to prevent rotation of the cheek (30) with respect to the rotor (10).

## Patentansprüche

1. Schaufelturbinenrad, das auf einen Rotor (10) aufgesetzt ist, mit einem umfangsseitig vorgesehenen ringförmigen Kranz (18), der mit in axialer Richtung offenen Aufnahmen (20) versehen ist, von denen jede den darin in radialer Richtung unter der Wirkung einer zueinander komplementären Form (25), in der Art eines Nutzapfens gehalten und in axialer Richtung durch zwei Flansche (28, 30) festgelegt ist, die beidseits der sich gegenüberstehenden Seitenflächen (24, 26) des Rotors angeordnet sind und die die axial sich gegenüberliegenden Enden der Aufnahmen (20) für die Füße (22) der Turbinenschaufeln (12) wenigstens teilweise verschließen, dadurch gekennzeichnet, daß der erste Flansch (28) durch eine Vorrichtung in der Art eines Bajonettverschlusses am Rotor (10) befestigt ist, deren Haken (32) am Flansch (28) angeformt und in Aussparungen (40) aufgenommen sind, die in den ringförmigen Kranz (18) des Rotors (10) eingeformt sind und deren für die Einführung der Haken (32) offenen Enden (44) in Querwände einmünden, die die Aufnahmen (20) für die Füße der Turbinenschaufeln (12) begrenzen.

2. Schaufelturbinenrad nach Anspruch 1, dadurch gekennzeichnet, daß jede der Aussparungen Teil einer radialen Rille (40) ist, die in die äußere Zylinderfläche (42) des ringförmigen Kranzes (18) des Rotors (10) eingeformt ist, und daß jeder Haken (32) einen Endabschnitt (36), der sich radial in Richtung der Achse (X-X) des Rotors erstreckt und von der Rille (40) aufgenommen ist, und einen Verbindungsschenkel (38) aufweist, der den Endabschnitt (36) mit dem Flansch (28) verbindet.

3. Schaufelturbinenrad nach Anspruch 1 oder 2, dadurch gekennzeichnet, daß der erste seitliche Flansch (28) einen Zentrierring (50) aufweist, der aus einer der Seitenflächen (34) axial heraussteht und mit einem entsprechenden Zentrierungsteil (52) zusammenwirkt, das gegenüberliegend in die erste Seitenfläche des Rotors (10) eingeformt ist.

4. Schaufelturbinenrad nach einem der Ansprüche 1 bis 3, dadurch gekennzeichnet, daß der zweite Flansch (30) einen ringförmigen, ebenen Teil (66) aufweist, der sich an einem entsprechenden ebenen Teil (64) an der gegenüberliegenden, zweiten Seitenfläche des Rotors (10) axial abstützt, wobei die zwei ringförmigen, ebenen Teile (64, 66) radial in Richtung zur Rotorachse hin von zwei sich verjüngenden Innenrändern in der Form von Scheibenteilen (68, 70) begrenzt sind, die durch einen Klemmring (78) aneinander gepreßt gehalten sind.

5. Schaufelturbinenrad nach Anspruch 4, dadurch gekennzeichnet, daß die einander entgegengesetzten äußeren Seitenflächen (72, 74) und beiden Scheibenteile Teile einer Kegelfläche mit entgegengesetzten Winkeln sind, wobei der Klemmring (78) ein elastisch verformbarer, offener Ring ist, der eine radial außenseitige Nut (76) mit einem V-förmigen, den Kegelflächen (72, 74) entsprechenden Querschnitt aufweist, und daß der Klemmring (78) radial vorgespannt ist, um auf die sich anliegenden ringförmigen Teile (64, 66) eine axiale Klemmkraft auszuüben.

6. Schaufelturbinenrad nach Anspruch 4 oder 5, dadurch gekennzeichnet, daß der zweite Flansch (30) einen Zentrierring (82) aufweist, der aus der einen Seitenfläche (60) axial heraussteht, um mit einem entsprechenden Zentrierungsteil (80) zusammenzuwirken, das in der gegenüberliegenden, zweiten Seitenfläche des Rotors eingeformt ist.

7. Schaufelturbinenrad nach einem der Ansprüche 4 bis 6, dadurch gekennzeichnet, daß Feststellvorrichtungen vorgesehen sind, um ein Drehen des zweiten Flansches (30) gegenüber dem Rotor (10) zu verhindern.

8. Schaufelturbinenrad nach Anspruch 7, dadurch gekennzeichnet, daß die Feststellvorrichtungen wenigstens eine Klammer (84) aufweisen, die aus dem Flansch (30) axial hervorsteht und mit einem gegenüberliegenden Teil einer der Turbinenschaufeln (12) zusammenwirkt, um eine Drehung des Flansches (30) gegenüber dem Rotor (10) zu verhindern.
